# EUROPEAN PATENT SPECIFICATION

(11) **EP 4 032 691 B1**
(45) Date of publication and mention of the grant of the patent: **27.05.2026**
(21) Application number: 19945839.9
(22) Date of filing: 31.10.2019
(51) Int. Cl.: B29C 70/34, B29C 70/36, B29C 70/88, B29C 70/44, B29C 70/48, B32B 5/02, B29K 105/00, B29L 31/30

(54) **CARBON NANOTUBE THIN FILM/COMPOSITE MATERIAL FORMING METHOD AND MANUFACTURED LIGHTNING PROTECTION STRUCTURE**
VERFAHREN ZUR HERSTELLUNG EINES DÜNNSCHICHT-/VERBUNDMATERIALS FÜR KOHLENSTOFFNANORÖHREN UND VERFAHREN ZUR HERSTELLUNG EINER BLITZSCHUTZSTRUKTUR
PROCÉDÉ DE FORMATION DE MATÉRIAU COMPOSITE/COUCHE MINCE DE NANOTUBES DE CARBONE ET STRUCTURE DE PROTECTION CONTRE LA FOUDRE FABRIQUÉE

(30) Priority: 20.09.2019 CN 201910890794
(43) Date of publication of application: 27.07.2022
(73) Proprietor: Beijing Aeronautical Science & Technology Research Institute,Commercial Aircraft Corporation of China, Beijing 102211 (CN); Commercial Aircraft Corporation Of China, Ltd., Shanghai 200126 (CN)
(72) Inventor: LIU, Yanan, Beijing 102211 (CN); GAO, Limin, Beijing 102211 (CN); FENG, Rongxin, Beijing 102211 (CN); ZU, Yanming, Beijing 102211 (CN)
(74) Representative: Gille Hrabal Partnerschaftsgesellschaft mbB Patentanwälte
(86) International application number: PCT/CN2019/114633
(87) International publication number: WO 2021/051486

(56) References cited:
- CN-A- 102 744 889
- CN-A- 103 554 530
- CN-A- 104 789 175
- CN-A- 104 789 175
- CN-A- 104 789 175
- CN-A- 105 082 568
- CN-A- 105 711 109
- CN-A- 106 671 451
- CN-A- 107 116 809
- CN-A- 107 584 780
- CN-A- 108 394 137
- CN-U- 205 632 999
- CN-U- 206 344 479
- KR-B1- 101 436 500
- US-A1- 2018 265 217

## Description

### TECHNICAL FIELD

The present invention belongs to the technical field of composite material lightning strike protection structures of airplanes, in particular to a fabrication method from carbon nanotube film - composite material and a lightning strike protection structure formed therefrom.

### BACKGROUND

An airplane inevitably encounters thunder and lightning during service. Compared with a metal material, a composite material is poor in conductivity, if no appropriate lightning strike protection measure is adopted when a component made from the composite material is struck by thunder and lightning, it is very difficult for the component to conduct an accumulated current within a short time, and consequently, the temperature is raised to enable the composite material to be deeply layered or seriously eroded, endangering normal use. Therefore, the component made from the composite material has to be subjected to lightning strike protection. At present, the main measure of lightning strike protection for the composite material is to add a conductive functional layer on the surface, which includes performing flame spraying of an aluminium coating, bonding a metal net, bonding aluminium foil or the like on the surface.

An aluminium coating protection method, that is, a film transfer method, is used for performing flame spraying on a composite material matrix by adopting a transfer method to manufacture an aluminium coating protection layer, or a plasma electroplating method may also be adopted to manufacture the aluminium coating, wherein the optimal thickness of the coating is 0.20 mm. The resistivity of aluminum is 2.83×10⁻⁸ Ω•m, with good conductivity, a continuous conductive layer may be formed after the aluminium coating is sprayed on the surface of the composite material, and the conductive layer provides a release channel for electrostatic charges generated by friction or induction of the airplane and a heavy current generated by thunderstrike.

A co-curing formation manner is adopted in a grid foil protection method, an aluminium or copper conductive grid is attached to a surface of a structure or buried below an outermost layer of the structure, wherein the resistivity of copper is 1.75×10⁻⁸ Ω•m, its conductivity is better than that of aluminum, and a high-density copper grid is beneficial to dredging an instant heavy current. Aluminium and copper grids may be laminated, sprayed and electroplated, after the grids are cured on a composite material structure, the composite material structure is capable of bearing a 200 kA current (generally, the thunderstrike current is 100 kA) without damage. Maintenance staff only needs to peel a damaged part, sand a surface and perform re-bonding during maintenance.

A surface layer protection method is applicable to a situation in which the requirements for conductivity are not very high. A relatively common manner is to spray an antistatic coating on the surface of the composite material, the antistatic coating is composed of resin or rubber playing a bonding role, a conductive filler, a solvent and the like, the conductive filler may be certain metal particles, these metal particles form a continuous conductive grid chain in a polymer, and thus, charges are discharged. In addition, a common surface layer protection method further includes a decoration strip method, that is, decorative conductive metal strips are inlaid on a surface of a paint layer. At present, some people have developed decoration strips into a decoration layer which may be pasted like wallpaper, and the decoration layer not only replaces paint spraying, but also has a conducting function and can be easily pasted or torn off.

The composite material of the airplane is mainly used for protecting the airplane in a manner of adding the conductive functional layer on its surface to discharge electrostatic charges or current on the surface in time, thereby avoiding airplane damage caused by thunderstrike and lightning. At present, the measures of adding the conductive functional layer are mainly to perform flame spraying of an aluminium coating, bond a metal net, bond aluminium foil or the like on the surface of the composite material. Existing conductive functional layers all adopt a metal material with higher density, which may undoubtedly increase the weight of the airplane. In addition, material performance differences between metal and the composite material cause problems of interface cooperation and potential corrosion, and therefore, an insulating layer is required to be additionally introduced, which also causes the increment of the weight. Furthermore, a secondary process is required in the measures for adding the conductive function layer, and the process is complicated, resulting in higher cost.

In addition, there is further a research in which different dispersion technologies are adopted to disperse powdery carbon nanotubes into a composite material resin matrix to manufacture a conductive composite material, which solves the problem of performance differences between different materials. However, due to dispersion difficulty caused by the nanoscale agglomeration problem of the powdery carbon nanotubes, the content of the conductive carbon nanotubes in the composite material is lower than 2%, the manufactured composite material is poorer in conductivity, and the viscosity of resin is increased due to the addition of the carbon nanotubes, which affects the process performance of the composite material.

US 2018/0265217 A1 discloses fibre-reinforced composite materials for civil aviation applications, and more particularly to composite materials comprising structural fibres having nanostructures such as carbon nanotubes extending therefrom.

In conclusion, in view of the above-mentioned defects, it is necessary to provide a technical solution to overcome or at least relieve at least one of the above-mentioned defects in the prior art.

### SUMMARY

In order to solve the above-mentioned problems, the present invention provides a fabrication method from carbon nanotube film - composite material and a lightning strike protection structure formed therefrom. The lightning strike protection structure solves the problems of larger weight, poor integration with a body composite material and complicated process of an existing conductive functional layer for composite material lightning strike protection, and can be integrally formed by means of a one-step method.

The present invention is implemented according to claims 1 and 5.

Further, the fibers are dry fibers made from materials which are not limited, and may be carbon fibers or glass fibers.

According to the invention, the carbon nanotube film is a continuous high-conductivity ultralight carbon nanotube film.

Further, the thickness of the carbon nanotube film is not smaller than 15 µm and is adjustable.

Further, the surface density of the carbon nanotube film is not greater than l0 g/m².

Further, the carbon nanotube film is manufactured by adopting a floating catalyst chemical vapour deposition method.

Further, the conductivity of the carbon nanotube film is 10⁴-10⁶ s/m. Moreover, the conductivity in each direction of the carbon nanotube film is adjustable, and the conductivity in each direction may be adjusted by adjusting orientations of carbon nanotubes in the carbon nanotube film.

Further, the density of the composite material is 1.5-1.8 g/cm³.

Further, the carbon nanotube film adopted in the lightning strike protection structure is very light, the weight of the composite material is hardly increased, and therefore, the density of the lightning strike protection structure is 1.5-1.8 g/cm³.

Further, methods such as metal deposition, covalent bonding, heteroatom doping and resin compounding are adopted to improve the transfer of electrons among carbon nanotube interfaces in the carbon nanotube film, thereby further improving the conductivity of the carbon nanotube film.

The other objective of the present invention is to provide a fabrication method for the above-mentioned lightning strike protection structure from carbon nanotube film - composite material. In the fabrication method, structural design for a multiscale nanocomposite material lightning strike protection layer is performed based on a high-conductivity ultralight carbon nanotube film. In the fabrication method, a low-cost one-step liquid composite moulding process is adopted to integrally obtain a lightning strike protection structure from ultralight carbon nanotube film/composite material. The problems of larger weight, poor integration with a body composite material and complicated process of an existing conductive functional layer for composite material lightning strike protection are solved, and a lightning strike protection structure from multiscale ultralight carbon nanotube composite material can be integrally formed by means of a one-step method.

Further, the multiscale means that the lightning strike protection structure is a nanometer/micrometer/millimeter/meter-scale structure: a single carbon nanotube is on a nanometer scale, the carbon nanotube film is on a micrometer scale, the thickness of the composite material is on a millimeter scale, and the composite material is on a meter scale.

Further, the fabrication method includes the following steps:
S1, selecting a tool for a liquid composite moulding process, clearing the tool, and coating the tool with a release agent;
S2, sequentially laying first peel ply, a carbon nanotube film, an adhesive film, fibers, second peel ply, an isolating film, a flow guiding net, an inner vacuum bag, an air-permeable felt and an outer vacuum bag on the tool from bottom to top; and sealing a contact part between the inner vacuum bag / the outer vacuum bag and the tool by using a sealant;
S3, under the action of vacuumizing, importing liquid resin from adhesive inlets of the inner vacuum bag and the outer vacuum bag and exporting the liquid resin from adhesive outlets of the inner vacuum bag and the outer vacuum bag until the fibers in the step S2 are completely infiltrated by the liquid resin, and then, curing the liquid resin; and
S4, removing the first peel ply, the second peel ply, the isolating film, the flow guiding net, the inner vacuum bag, the air-permeable felt and the outer vacuum bag after the liquid resin is cured and formed, and obtaining the lightning strike protection structure from carbon nanotube film - composite material.

Further, the release agent is of a type AXEL CX-500 or PMR-EZ or any other type, is applied after the tool is cleared, and assists in demolding after curing.

Further, the laying in the step S2 adopts manual or automated laying, and an automated tape laying machine or an automated fiber placement machine is adopted for automated laying.

Further, the curing in the step S3 is performed by adopting a curing furnace.

Further, when the composite material is a prepreg, an autoclave is adopted to manufacture the lightning strike protection structure from carbon nanotube film - composite material. Specifically, the carbon nanotube film, the adhesive film and the prepreg are sequentially laid and are cured in the autoclave to obtain the lightning strike protection structure from carbon nanotube film - composite material.

Further, the vacuum degree achieved after vacuumizing in the step S3 is -90 KPa or above.

Further, the curing temperatures and the curing time in the step S3 vary with different resin systems. In a common aviation resin system, the curing temperature is 180°C, and the curing time is 2 h.

Further, the infusion quantity of the liquid resin is calculated by backward inference according to the final content of the fibers in the composite material. The resin enters from the adhesive inlets, and excess resin overflows from the adhesive outlets.

Further, in the composite material, the volume content of the fibers is about 55%, and the sum of the volumes of the resin and the fibers is 100%.

Further, in the fabrication method, the peel plies and the isolating film serve as auxiliary materials to protect the surface of the composite material; the flow guiding net serves as a resin flow guiding medium in a liquid composite moulding process to assist the resin in infiltrating a dry fiber preform; the inner vacuum bag is used for providing a required vacuum environment to suck the resin; the air-permeable felt plays a role in guiding air, to make pressures in all regions in the vacuum bags uniform; and the outer vacuum bag is used for avoiding air leakage under the condition that the inner vacuum bag is damaged to ensure vacuum on the one hand, and used for providing a uniform pressure under the condition that the inner vacuum bag is not damaged on the other hand, so that the respective regions of the composite material have the same pressure and uniform thickness in a thickness direction.

The present invention has the following beneficial technical effects:
1) In the fabrication method by the present invention, the continuous high-conductivity ultralight carbon nanotube film serving as the conductive functional layer is low in density, has the surface density not greater than 10 g/m², and uses the same carbon material as the composite material to have good integration with the composite material, so that the interface problem is reduced. In addition, the conductivity of the carbon nanotube film can be improved by means of the methods such as metal deposition, covalent bonding, heteroatom doping and resin compounding.
2) Compared with the existing secondary process adopted for compounding the metal conductive functional layer and the body composite material, the fabrication method proposed by the present invention has the advantage that the one-step liquid comoposite moulding process is adopted to manufacture the lightning strike protection structure from carbon nanotube film - composite material, secondary bonding is not needed, and thus, the process is simplified.
3) In the lightning strike protection structure provided by the present invention, a layer of adhesive film is adopted between the high-conductivity ultralight carbon nanotube film and the composite material, and it is unnecessary to additionally adopt an insulating glass fiber layer, so that not only can the conductivity of the carbon nanotube film be kept to ensure a lightning strike protection effect, but also the weight can be reduced to improve the effect of interface bonding between the conductive functional layer and the composite material.
4) In the lightning strike protection structure provided by the present invention, the carbon nanotube film is adopted to replace an existing metal conductive functional layer such as a copper grid and aluminium foil. Compared with the existing metal conductive functional layer such as the copper grid and the aluminium foil, the continuous high-conductivity ultralight carbon nanotube film serving as the conductive functional layer is low in density, and uses the same carbon material as the body composite material to have good interface integration.
5) Compared with an existing insulating glass fiber layer added for avoiding potential corrosion and located between the metal conductive functional layer and the body composite material, the lightning strike protection structure provided by the present invention has the advantage that a layer of adhesive film is used between the multiscale ultralight carbon nanotube film and the body composite material provided in the method, it is unnecessary to additionally adopt the insulating glass fiber layer, so that not only can the conductivity of the carbon nanotube film be kept to ensure the lightning strike protection effect, but also the weight can be reduced to improve the effect of interface bonding between the conductive functional layer and the body composite material.

### BRIEF DESCRIPTION OF THE DRAWINGS

Fig. 1 is a schematic structural diagram showing a lightning strike protection structure in an embodiment of the present invention;
Fig. 2 is a diagram showing a microstructure of a carbon nanotube film in an embodiment of the present invention;
Fig. 3 is a schematic structural diagram showing laying of each layer in a fabrication method in an embodiment of the present invention;
Fig. 4 is a schematic diagram showing importing and exporting positions of liquid resin in a fabrication method in an embodiment of the present invention; and
Fig. 5 is a flow chart of a fabrication method in an embodiment of the present invention.

Description for reference numerals in the accompanying drawings: 1-carbon nanotube film, 2-adhesive film, 3-composite material, and 31-fiber.

### DETAILED DESCRIPTION

In order to make objectives, technical solutions and advantages of the present invention clearer and more understandable, the present invention will be further described in detail below in conjunction with embodiments and the accompanying drawings. It should be understood that the specific embodiments described herein are merely intended to explain the present invention, rather than to limit the present invention.

On the contrary, the present invention incorporates any replacements, modifications, equivalent teaching methods and solutions within the spirit and scope of the present invention as defined by the claims. Further, in order to provide better understanding of the present invention for the public, some specific details will be described in detail in the following detail description of the present invention. Those skilled in the art may still completely understand the present invention without the description of these details.

It should be understood that the described embodiments are only a part, but not all of the embodiments of the present invention. Based on the embodiments of the present invention, all other embodiments derived by those of ordinary skill in the art without creative effort shall fall within the protection scope of the present invention.

Terms used in the embodiments of the present invention are only for the purpose of describing specific embodiments, rather than limiting the present invention. The singular forms "a", "the" and "this" used in the embodiments and the appended claims of the present invention are also intended to include a plural form unless other meanings are clearly expressed in the context.

### Embodiment 1

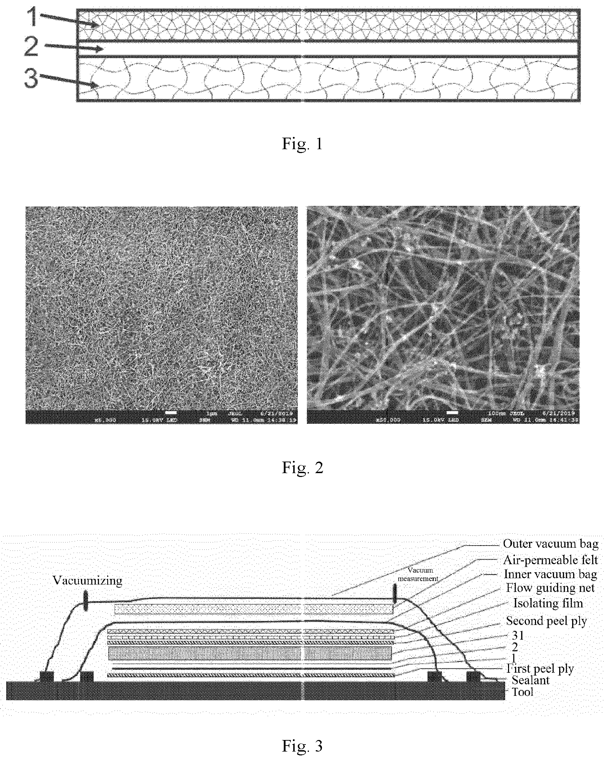

The embodiment provides a carbon nanotube film - composite material lightning strike protection structure. As shown in Fig. 1 and Fig. 2, the lightning strike protection structure includes:
a carbon nanotube film, being used as a conductive layer;
a composite material, including fibers and a resin with which the fibers are bonded together; and
an adhesive film, being used for electric insulation between the composite material and the carbon nanotube film;
wherein the carbon nanotube film, the adhesive film, and the composite material are sequentially configurated.

The fibers are dry fibers made from materials which are not limited, and may be carbon fibers or glass fibers.

The carbon nanotube film is a continuous high-conductivity ultralight carbon nanotube film.

The thickness of the carbon nanotube film is not smaller than 15 µm and is adjustable.

The surface density of the carbon nanotube film is not greater than l0 g/m².

The carbon nanotube film is manufactured by adopting a floating catalyst chemical vapour deposition method.

The conductivity of the carbon nanotube film is 10⁴-10⁶ s/m and is adjustable.

The density of the composite material is 1.5-1.8 g/cm³.

The carbon nanotube film adopted in the lightning strike protection structure is very light, the weight of the composite material is hardly increased, and therefore, the density of the lightning strike protection structure is 1.5-1.8 g/cm³.

Methods such as metal deposition, covalent bonding, heteroatom doping and resin compounding are adopted to improve the transfer of electrons among carbon nanotube interfaces in the carbon nanotube film, thereby further improving the conductivity of the carbon nanotube film.

### Embodiment 2

The embodiment provides a fabrication method for the carbon nanotube film - composite material lightning strike protection structure in Embodiment 1. In the fabrication method, structural design for a multiscale nanocomposite material lightning strike protection layer is performed based on the high-conductivity ultralight carbon nanotube film. In the fabrication method, a low-cost liquid fabrication one-step method is adopted to integrally obtain an ultralight carbon nanotube film - composite material lightning strike protection structure. The problems of larger weight, poor integration with a body composite material and complicated process of an existing conductive functional layer for composite material lightning strike protection are solved, and a multiscale ultralight carbon nanotube composite material lightning strike protection structure can be integrally formed by means of a one-step method.

The multiscale means that the lightning strike protection structure is a nanometer/micrometer/millimeter/meter-scale structure: a single carbon nanotube is on a nanometer scale, the carbon nanotube film is on a micrometer scale, the thickness of the composite material is on a millimeter scale, and the composite material is on a meter scale.

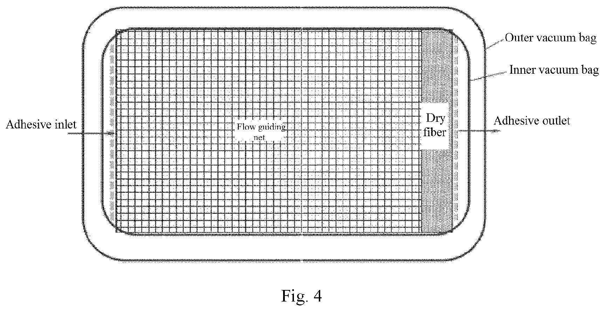

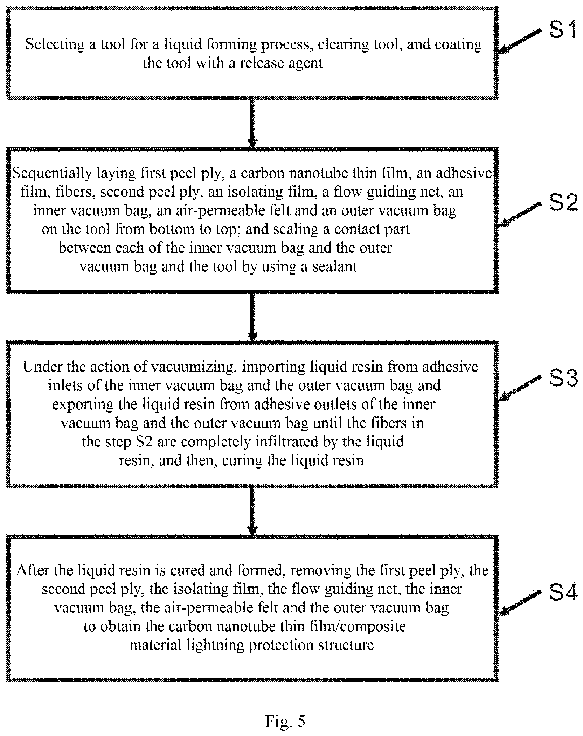

Referring to Fig. 3, Fig. 4 and Fig. 5, the fabrication method includes the following steps:
S1, a tool for a liquid fabrication process is selected, and the tool is cleared and is coated with a release agent;
S2, first peel ply, a carbon nanotube film, an adhesive film, fibers, second peel ply, an isolating film, a flow guiding net, an inner vacuum bag, an air-permeable felt and an outer vacuum bag are sequentially laid on the tool from bottom to top; and a contact part between the inner vacuum bag / the outer vacuum bag and the tool is sealed by using a sealant;
S3, under the action of vacuumizing, liquid resin is imported from adhesive inlets of the inner vacuum bag and the outer vacuum bag and is exported from adhesive outlets of the inner vacuum bag and the outer vacuum bag until the fibers in the step S2 are completely infiltrated by the liquid resin, and then, the liquid resin is cured; and
S4, after the liquid resin is cured and formed, the first peel ply, the second peel ply, the isolating film, the flow guiding net, the inner vacuum bag, the air-permeable felt and the outer vacuum bag are removed to obtain the carbon nanotube film - composite material lightning strike protection structure.

The release agent is of a type AXEL CX-500 or PMR-EZ or any other type with the same function, is applied after a mold is cleared, and assists in demolding after curing.

The laying in the step S2 adopts manual or automated laying, and an automated tape laying machine or an automated fiber placement machine is adopted for automated laying.

The curing in the step S3 is performed by adopting an autoclave or a curing furnace.

The vacuum degree achieved after vacuumizing in the step S3 is -90 KPa or above.

The curing temperatures and the curing time in the step S3 vary with different resin systems. In a common aviation resin system, the curing temperature is 180°C, and the curing time is 2 h.

The infusion quantity of the liquid resin is calculated by backward inference according to the final content of the fibers in the composite material. The resin enters from the adhesive inlets, and excess resin overflows from the adhesive outlets.

In the composite material, the volume content of the fibers is about 55%, and the sum of the volumes of the resin and the fibers is 100%.

In the fabrication method, the peel plies and the isolating film serve as auxiliary materials to protect the surface of the composite material; the flow guiding net serves as a resin flow guiding medium in the liquid composite moulding process to assist the resin in infiltrating a dry fiber preform; the inner vacuum bag is used for providing a required vacuum environment to suck the resin; the air-permeable felt plays a role in guiding air, to make pressures in all regions in the vacuum bags keeping uniform; and the outer vacuum bag is used for avoiding air leakage under the condition that the inner vacuum bag is damaged to ensure vacuum on the one hand, and used for providing a uniform pressure under the condition that the inner vacuum bag is not damaged on the other hand, so that the respective regions of the composite material have the same pressure and uniform thickness in a thickness direction.

### Embodiment 3

The embodiment provides a fabrication method for the carbon nanotube film - composite material lightning strike protection structure in Embodiment 1. When the composite material is a prepreg, an autoclave is adopted to manufacture the carbon nanotube film/composite material lightning strike protection structure. Specifically, the carbon nanotube film, the adhesive film and the prepreg are sequentially laid and are cured in the autoclave to obtain the carbon nanotube film/composite material lightning strike protection structure.

The carbon nanotube film - composite material lightning strike protection structure and the fabrication method thereof provided by the embodiments of the present invention are described in detail above. The descriptions for the above-mentioned embodiments are only intended to help understand the method and its core concept. Meanwhile, for those of ordinary skill in the art, the specific implementation manners and application scopes may be changed according to the concept of the present invention. In conclusion, the content of the description should not be understood as a limitation on the present invention.

If certain terms are used in the description and claims to indicate specific assemblies, components, those skilled in the art should understand that a hardware manufacturer may use different terms to refer to the same assembly. In the description and claims, a name difference is not used as an assembly distinguishing manner, but a difference of functions of the assemblies is used as a distinguishing criterion. For example, "include" or "comprise" mentioned in the entire description and claims is an open-type term so as to be explained as "including/comprising, but not limited to". "Approximate" means that those skilled in the art can solve the technical problems within a certain error range and the technical effects are basically achieved within an acceptable error range. The subsequent description of the present invention is about preferred implementation manners for implementing the present invention, however, the description is still for the purpose of illustrating the general principle of the present invention, and is not intended to limit the scope of the present invention. The protection scope of the present invention should be defined by the appended claims.

It should be further noted that terms "comprise", "include" or any other variants thereof are intended to cover non-excludable inclusion, so that a commodity or system including a series of elements not only includes those elements, but also includes other elements not listed clearly, or further includes inherent elements of the commodity or system. Under the condition of no further limitations, elements defined by the statement "including a......" do not exclude other same elements present in the commodity or system including the elements.

It should be understood that a term "and/or" used herein only describes an association relationship for associated objects and means that there may be three relationships, for example, A and/or B may denote three situations: A exists alone, A and B exist at the same time, and B exists alone. In addition, the character "/" used herein generally denotes that forward and backward associated objects are in an "or" relationship.

Several preferred embodiments of the present invention are shown and described in the above-mentioned description, however, as previously mentioned, it should be understood that the present invention is not limited to the form disclosed herein, should not be regarded as the exclusion of other embodiments, can be used in various other combinations, modifications and environments and can be changed within the scope of the concept of the present invention according to the above teachings or technologies or knowledge in the related art. The changes and variations made by those skilled in the art shall fall within the protection scope of the appended claims of the present invention without departing from the scope of the present invention.

## Claims

1. A fabrication method for a lightning strike protection structure from carbon nanotube film (1) - composite material (3), **characterized by** adopting a one-step liquid composite moulding process to integrally obtain a lightning strike protection structure (1, 2, 3), which is made from carbon nanotube film (1) - composite material (3), wherein an adhesive film (2) being used as electric insulation between the composite material (3) and the carbon nanotube film (1), wherein the carbon nanotube film (1), the adhesive film (2), and the composite material (3) are sequentially configurated,
wherein the carbon nanotube film (1) serving as a conductive functional layer is a continuous carbon nanotube film (1).

2. The fabrication method according to claim 1, **characterized by** comprising the following steps:
S1, selecting a tool for a liquid composite moulding process, clearing the tool, and coating the tool with a release agent;
S2, sequentially laying first peel ply, a carbon nanotube film (1), the adhesive film (2), fibers, second peel ply, an isolating film, a flow guiding net, an inner vacuum bag, an air-permeable felt and an outer vacuum bag on the tool from bottom to top; and sealing a contact part between the inner vacuum bag / the outer vacuum bag and the tool by using a sealant;
S3, importing liquid resin from adhesive inlets of the inner vacuum bag and the outer vacuum bag and exporting the liquid resin from adhesive outlets of the inner vacuum bag and the outer vacuum bag under the action of vacuumizing, until the fibers in the step S2 are completely infiltrated by the liquid resin, and then, curing the liquid resin; and
S4, removing the first peel ply, the second peel ply, the isolating film, the flow guiding net, the inner vacuum bag, the air-permeable felt and the outer vacuum bag after the liquid resin is cured and formed, and obtaining the lightning strike protection structure, which is made from carbon nanotube film (1)-composite material (3).

3. The fabrication method according to claim 2, **characterized in that** the laying operation in the step S2 adopts manual laying or automated laying, and an automated tape laying machine or an automated fiber placement machine is adopted for the automated laying.

4. The fabrication method according to claim 2, **characterized in that** the curing operation in the step S3 is performed by adopting an autoclave or a curing furnace.

5. A lightning strike protection structure, which is made from carbon nanotube film (1)-composite material (3) and manufactured by using the fabrication method according to any one of claims 1-4, comprising:
a carbon nanotube film (1), being used as a conductive layer;
a composite material (3), comprising fibers and a resin matrix with which the fibers are bonded together; and
an adhesive film (2), being used as electric insulation between the composite material (3) and the carbon nanotube film (1);
wherein the carbon nanotube film (1), the adhesive film (2), and the composite material (3) are sequentially configurated,
**characterized in that**
the carbon nanotube film (1) serving as the conductive functional layer is a continuous carbon nanotube film (1).

6. The lightning strike protection structure according to claim 5, **characterized in that** the thickness of the carbon nanotube film (1) is not smaller than 15 µm.

7. The lightning strike protection structure according to claim 5, **characterized in that** the surface density of the carbon nanotube film (1) is not greater than l0 g/m².

8. The lightning strike protection structure according to claim 5, **characterized in that** the conductivity of the carbon nanotube film (1) is 10⁴-10⁶ s/m, which is adjustable.

## Patentansprüche

1. Herstellungsverfahren für eine Blitzschutzstruktur aus Kohlenstoffnanoröhrenfilm (1) - Verbundwerkstoff (3), **dadurch gekennzeichnet, dass** ein einstufiges Flüssigverbundformverfahren angewendet wird, um integral eine Blitzschutzstruktur (1, 2, 3) zu erhalten, die aus Kohlenstoffnanoröhrenfilm (1) - Verbundwerkstoff (3) hergestellt ist, wobei ein Klebefilm (2) als elektrische Isolierung zwischen dem Verbundwerkstoff (3) und dem Kohlenstoffnanoröhrenfilm (1) verwendet wird, wobei der Kohlenstoffnanoröhrenfilm (1), der Klebefilm (2) und der Verbundwerkstoff (3) sequentiell angeordnet sind,
wobei der Kohlenstoffnanoröhrenfilm (1), der als leitfähige Funktionsschicht dient, ein kontinuierlicher Kohlenstoffnanoröhrenfilm (1) ist.

2. Herstellungsverfahren nach Anspruch 1, **dadurch gekennzeichnet, dass** es die folgenden Schritte umfasst:
S1, Auswählen eines Werkzeugs für ein Flüssigverbundformverfahren, Reinigen des Werkzeugs und Beschichten des Werkzeugs mit einem Trennmittel;
S2, sequentielles Auflegen von erstem Abreißgewebe, einem Kohlenstoffnanoröhrenfilm (1), dem Klebefilm (2), Fasern, zweitem Abreißgewebe, einer Isolierfolie, einem strömungsführenden Netz, einem inneren Vakuumbeutel, einem luftdurchlässigen Vlies und einem äußeren Vakuumbeutel auf das Werkzeug von unten nach oben; und Abdichten eines Kontaktbereichs zwischen dem inneren Vakuumbeutel / dem äußeren Vakuumbeutel und dem Werkzeug unter Verwendung eines Dichtmittels;
S3, Einführen von flüssigem Harz durch Klebstoffeinlässe des inneren Vakuumbeutels und des äußeren Vakuumbeutels und Ausführen des flüssigen Harzes aus Klebstoffauslässen des inneren Vakuumbeutels und des äußeren Vakuumbeutels unter der Wirkung eines Evakuierens, bis die Fasern in Schritt S2 vollständig von dem flüssigen Harz durchtränkt sind, und anschließend Aushärten des flüssigen Harzes;
und
S4, Entfernen des ersten Abreißgewebes, des zweiten Abreißgewebes, der Isolierfolie, des strömungsführenden Netzes, des inneren Vakuumbeutels, des luftdurchlässigen Vlieses und des äußeren Vakuumbeutels, nachdem das flüssige Harz ausgehärtet und geformt ist, und Erhalten der Blitzschutzstruktur, die aus Kohlenstoffnanoröhrenfilm (1) - Verbundwerkstoff (3) hergestellt ist.

3. Herstellungsverfahren nach Anspruch 2, **dadurch gekennzeichnet, dass** der Auflegevorgang in Schritt S2 manuelles Auflegen oder automatisiertes Auflegen anwendet, und eine automatisierte Bandlegemaschine oder eine automatisierte Faserplatzierungsmaschine für das automatisierte Auflegen verwendet wird.

4. Herstellungsverfahren nach Anspruch 2, **dadurch gekennzeichnet, dass** der Aushärtevorgang in Schritt S3 unter Verwendung eines Autoklaven oder eines Aushärteofens durchgeführt wird.

5. Blitzschutzstruktur, die aus Kohlenstoffnanoröhrenfilm (1) - Verbundwerkstoff (3) hergestellt und unter Verwendung des Herstellungsverfahrens nach einem der Ansprüche 1-4 gefertigt ist, umfassend:
einen Kohlenstoffnanoröhrenfilm (1), der als leitfähige Schicht verwendet wird;
einen Verbundwerkstoff (3), der Fasern und eine Harzmatrix umfasst, mit der die Fasern miteinander verbunden sind; und
einen Klebefilm (2), der als elektrische Isolierung zwischen dem Verbundwerkstoff (3) und dem Kohlenstoffnanoröhrenfilm (1) verwendet wird;
wobei der Kohlenstoffnanoröhrenfilm (1), der Klebefilm (2) und der Verbundwerkstoff (3) sequentiell angeordnet sind,
**dadurch gekennzeichnet, dass**
der Kohlenstoffnanoröhrenfilm (1), der als leitfähige Funktionsschicht dient, ein kontinuierlicher Kohlenstoffnanoröhrenfilm (1) ist.

6. Blitzschutzstruktur nach Anspruch 5, **dadurch gekennzeichnet, dass** die Dicke des Kohlenstoffnanoröhrenfilms (1) nicht kleiner als 15 µm ist.

7. Blitzschutzstruktur nach Anspruch 5, **dadurch gekennzeichnet, dass** die Oberflächendichte des Kohlenstoffnanoröhrenfilms (1) nicht größer als 10 g/m² ist.

8. Blitzschutzstruktur nach Anspruch 5, **dadurch gekennzeichnet, dass** die Leitfähigkeit des Kohlenstoffnanoröhrenfilms (1) 10⁴-10⁶ S/m beträgt, die einstellbar ist.

## Revendications

1. Procédé de fabrication d'une structure de protection contre la foudre à partir du film de nanotubes de carbone (1) - du matériau composite (3), **caractérisé en ce qu'**il utilise un procédé de moulage de composite liquide en une seule étape pour obtenir intégralement une structure de protection contre la foudre (1, 2, 3), qui est faite à partir du film de nanotubes de carbone (1) - du matériau composite (3), dans lequel un film adhésif (2) étant utilisé comme isolation électrique entre le matériau composite (3) et le film de nanotubes de carbone (1), dans lequel le film de nanotubes de carbone (1), le film adhésif (2) et le matériau composite (3) sont configurés séquentiellement,
dans lequel le film de nanotubes de carbone (1) servant de couche fonctionnelle conductrice est un film de nanotubes de carbone continu (1).

2. Le procédé de fabrication selon la revendication 1, **caractérisé en ce qu'**il comprend les étapes suivantes :
S1, sélectionner un outil pour un procédé de moulage de composite liquide, nettoyer l'outil et enduire l'outil avec un agent de démoulage ;
S2, poser séquentiellement, de bas en haut, sur l'outil, un premier contreplaqué pelant, un film de nanotubes de carbone (1), le film adhésif (2), des fibres, un deuxième contreplaqué pelant, un film isolant, un filet à guidage de flux, un sac à vide intérieur, un feutre perméable à l'air et un sac à vide extérieur ; et sceller une partie de contact entre le sac à vide intérieur / le sac à vide extérieur et l'outil en utilisant un scellant ;
S3, importer de la résine liquide par des entrées d'adhésif du sac à vide intérieur et du sac à vide extérieur et exporter la résine liquide par des sorties d'adhésif du sac à vide intérieur et du sac à vide extérieur sous l'action de mise sous vide, jusqu'à ce que les fibres de l'étape S2 sont complètement infiltrées par la résine liquide, et puis, faire durcir la résine liquide ; et
S4, retirer, après la résine liquide a durci et pris forme, le premier contreplaqué pelant, le deuxième contreplaqué pelant, le film isolant, le filet à guidage de flux, le sac à vide intérieur, le feutre perméable à l'air et le sac à vide extérieur, et obtenir la structure de protection contre la foudre, qui est faite à partir du film de nanotubes de carbone (1) - du matériau composite (3).

3. Le procédé de fabrication selon la revendication 2, **caractérisé en ce que** l'opération de pose de l'étape S2 utilise une pose manuelle ou une pose automatisée, et **en ce qu'**une machine de pose de ruban automatisée ou une machine de placement de fibres automatisée est utilisée pour la pose automatisée.

4. Le procédé de fabrication selon la revendication 2, **caractérisé en ce que** l'opération de durcissement de l'étape S3 est effectuée en utilisant un autoclave ou un four de durcissement.

5. Structure de protection contre la foudre, qui est faite à partir du film de nanotubes de carbone (1) - du matériau composite (3) et fabriquée en utilisant le procédé de fabrication selon l'une quelconque des revendications 1 à 4, comprenant :
un film de nanotubes de carbone (1), étant utilisé comme couche conductrice ;
un matériau composite (3), comprenant des fibres et une matrice de résine avec laquelle les fibres sont liées entre elles ; et
un film adhésif (2), étant utilisé comme isolation électrique entre le matériau composite (3) et le film de nanotubes de carbone (1) ;
dans lequel le film de nanotubes de carbone (1), le film adhésif (2) et le matériau composite (3) sont configurés séquentiellement,
**caractérisé en ce que**
le film de nanotubes de carbone (1) servant de couche fonctionnelle conductrice est un film de nanotubes de carbone continu (1).

6. La structure de protection contre la foudre selon la revendication 5, **caractérisée en ce que** l'épaisseur du film de nanotubes de carbone (1) n'est pas inférieure à 15 µm.

7. La structure de protection contre la foudre selon la revendication 5, **caractérisée en ce que** la densité surfacique du film de nanotubes de carbone (1) n'est pas supérieure à 10 g/m².

8. La structure de protection contre la foudre selon la revendication 5, **caractérisée en ce que** la conductivité du film de nanotubes de carbone (1) est de 10⁴ - 10⁶ s/m, qui est réglable.
